(19) Europäisches Patentamt
European Patent Office
Office européen des brevets

(11) Publication number: 0 498 199 A2

# EUROPEAN PATENT APPLICATION

(21) Application number: 92100830.6

(22) Date of filing: 20.01.92

(51) Int. Cl.5: G01S 5/14, G04G 9/00

(30) Priority: 04.02.91 US 650276

(43) Date of publication of application:
12.08.92 Bulletin 92/33

(84) Designated Contracting States:
DE FR GB IT SE

(71) Applicant: MOTOROLA, INC.
1303 East Algonquin Road
Schaumburg, IL 60196(US)

(72) Inventor: Lauro, George L.
177 Schuldt Drive
Lake Zurich, Illinois 60047(US)

Inventor: Menick, Ralph E.
1070 Holly Circle
Lake Zurich, Illinois 60047(US)
Inventor: Vitucci, Antonio
25174 East Ivanhoe Road
Wauconda, Illinois 60084(US)

(74) Representative: Dunlop, Hugh Christopher et al
Motorola European Intellectual Property Operations Jays Close Viables Industrial Estate
Basingstoke, Hampshire RG22 4PD(GB)

(54) Satellite signal receiver with automatic time of day information.

(57) A satellite signal receiver (10) preferably uses a conventional signal processor (12) to generate information concerning latitude, longitude, date and a time of day reference. A computer, which may or may not be a part of the signal processor, uses the information generated by the signal processor, along with information stored in special databases, to generate a signal representing the time of day (standard or daylight savings) of the geographic location represented by the latitude and longitude information.

## FIG.1

## Field of the Invention

This invention is directed to satellite signal receivers, such as GPS (Global Positioning System) receivers, that develop information indicative of local geographic position based on satellite-transmitted signals.

## Background of the Invention

Conventional satellite signal receivers are capable of generating information relating to local latitude and longitude, date, and a reference time of day. Such receivers that operate with GPS signals can generate a reference time of day signal that corresponds to GMT (Greenwich Mean Time).

A drawback of such receivers is that they do not automatically generate a signal indicative of local time, although such receivers can be manually set to display local time and to cause the local time display to track with the reference time of day.

## Objects of the Invention

It is a general object of the invention to provide an improved satellite signal receiver.

It is a more specific object of the invention to provide a satellite signal receiver capable of automatically generating a signal indicative of local time of day, preferably taking into account local daylight savings times rules.

## Brief Description of the Drawings

FIG. 1 is a block diagram of a satellite signal receiver in accordance with the invention; and
FIG. 2 is a flow chart indicating how the receiver is programmed to compute local time of day.

## Description of the Preferred Embodiment

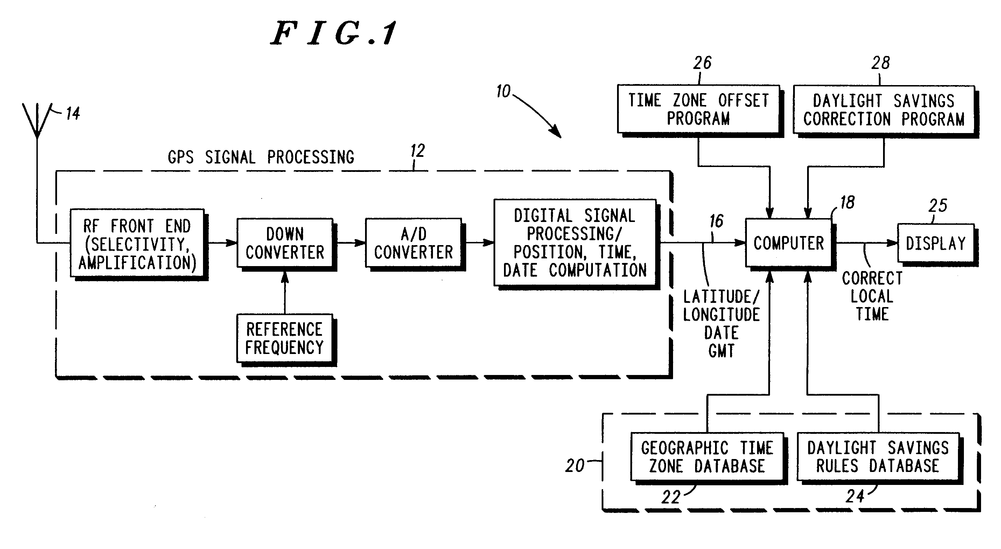

Referring to FIG. 1, the illustrated satellite receiver 10 is exemplary of the type of receiver in which the invention may be included. This particular receiver is a GPS receiver having conventional signal processing circuitry 12 coupled to an antenna 14 which receives satellite-transmitted GPS signals. The operation of the signal processing circuitry is conventional and will not be described other than to say that the output 16 of the signal processing circuitry 12 includes one or more signals that are representative of the local geographic position (e.g., the latitude and longitude at which the receiver is situated), the date, and a reference time of day. The reference time of day refers to the time of day associated with a pre-selected geographic location. In the GPS system, the reference time of day is Universal Coordinated Time (UTC), which corresponds to GMT.

The receiver 10 also includes a computer 18 which may be a microprocessor such as a MC68331 made by Motorola, Inc.. Alternately, the computer may be part of the signal processing circuit 12. In either event, the computer 18 receives the output 16 from the circuit 12 and is programmed to compute the local time of day, i.e., the time of day for the geographic location indicated by the latitude and longitude information provided at the output 16.

Coupled to the computer 18 is a memory 20 which may be a read only memory. Alternately, the memory 20 may be built into the computer 18 or may be part of a larger memory built into the receiver 10. In any event, the memory 20 includes a pair of databases 22, 24.

The database 22 is a geographic time zone database containing time offset information representing differences between GMT (or another reference time) and different geographic time zones. For example, the information in the database 22 can indicate that the location identified by the calculated latitude and longitude of the receiver is within a certain time zone, and that standard time for that time zone is offset by plus 4 hours with respect to GMT. The computer 18 is programmed by a time zone offset program 26 (discussed in more detail below) to access the correct time offset from the database 22 and to combine that offset with GMT to develop a signal representing correct local standard time. Another program 28 causes the computer 18 to access the database 24 and to convert local standard time to local daylight savings time. A display 25 will normally be included (or another display in the receiver may be shared) to display the calculated local time to an operator.

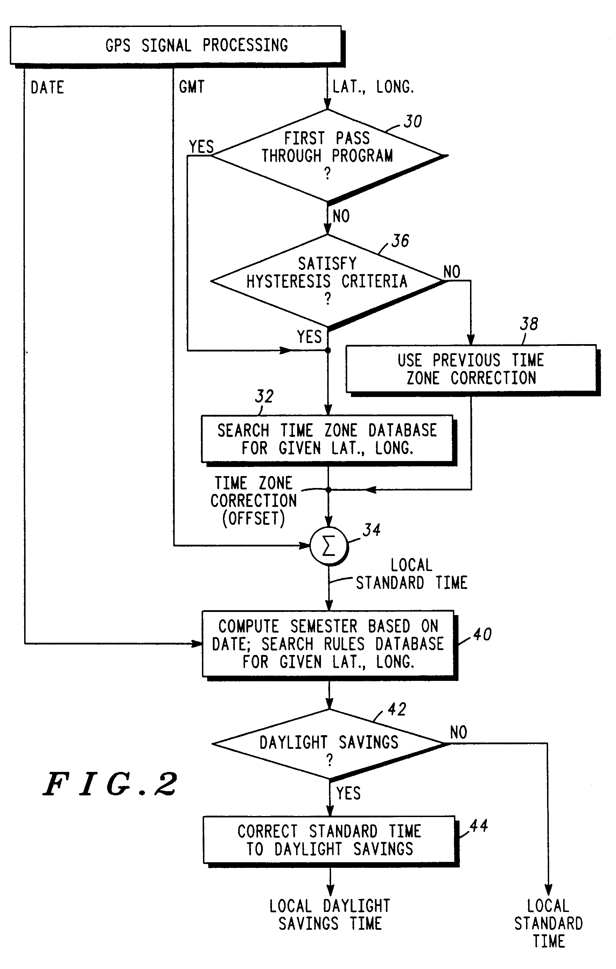

Turning now to FIG. 2, the illustrated chart indicates how the computer 18 may be programmed to compute correct local time. The functions effected by the instructions in this chart depend on the date, GMT, and latitude, longitude information developed by the signal processing circuit 12.

The first instruction 30 determines whether this is the first pass through this program subsequent to power-on. If this is the first pass through the program, the next instruction which is executed is instruction 32 which causes the computer to search the time zone database 22 to identify the time zone associated with the present latitude/longitude information, and to extract the time zone correction, or time offset, associated with the identified time zone. For example, the execution of instruction 32 might result in extracting from the time zone database a time offset of plus four hours. This means that the time zone associated with the present latitude/longitude has a local standard time that is four hours later than GMT. Thus, for a GMT of 1300 hours, the local standard time would be 1700 hours. The next instruction 34 develops this information by combining GMT (1300 hours) with the time offset ( + 4 hours) determined by instruction 32, thereby generating a signal representing a local standard time of 1700 hours.

Referring again to instruction 30, the second and subsequent passes through this program result in the execution of instruction 36 immediately following the execution of instruction 30. The hysteresis criteria referred to in instruction 36 is intended to ensure that the most recent latitude/longitude information places the receiver definitely inside the boundary of a time zone. For example, instruction 36 might ask the computer to determine, based on the most recent latitude/longitude information, whether the receiver is at least 100 meters within the boundary of a time zone. If the answer to this inquiry is "yes", then the program proceeds to instructions 32 and 34 to compute local standard time as discussed previously. If the answer is "no", the program proceeds to instruction 38 which causes the computer to use the time zone correction (offset) for the last latitude/longitude information that satisfied the hysteresis criteria. Then instruction 34 combines GMT with that last time offset to develop a signal indicative of local standard time.

To compute local daylight savings time, instructions 40 and 42 cause the computer to use the date information to calculate the correct "semester" (i.e., the correct month, quarter, etc. during which daylight saving times go into effect or terminate), and to use the latitude/longitude information to search the rules database 24 to determine whether daylight savings time is in effect in the present geographic location and in the present "semester". If daylight savings time is in effect in the local time zone, the database also provides the amount of time to be added/subtracted from standard time to compute local daylight savings time. If daylight savings time is not in effect, instruction 42 outputs local standard time. Otherwise, the program proceeds to instruction 44 to change the previously computed standard time to daylight savings time, based on the information obtained from database 24 when instruction 40 was executed.

Although the embodiment shown in FIG. 1 generates a reference time of day signal and the date from a satellite-transmitted signal, it is also contemplated that the reference time of day signal and the date may be generated by a clock which is part of the receiver. In this latter embodiment, the operator would initially set the clock to the appropriate date and to a reference time which could be GMT or local time. That reference time would then be updated using the databases 22 and 24 and the relevant part of the program shown in FIG. 2 in conjunction with the latitude/longitude information generated by the signal processing circuitry. Thus, as the date and/or geographic position of the receiver changes, the local time of day would be changed appropriately.

From the foregoing description, it can be seen that this invention provides a satellite signal receiver that can automatically display and/or update local time without the need for operator intervention. An additional advantage of the receiver shown in FIG. 1 is that the reference time which the receiver develops is very accurate, and therefore the displayed local time will also be highly accurate, and not subject to errors introduced by an operator who is trying to set his conventional satellite signal receiver to local time.

Although the invention has been described in terms of a preferred embodiment, it will be obvious to those skilled in the art that various modifications and alterations may be made without departing from the invention. Accordingly, it is intended that all such modifications and alterations be considered as within the spirit and scope of the invention as defined by the appended claims.

## Claims

1. A satellite signal receiver responsive to a satellite-transmitted signal, comprising:
   circuit means for developing information signals representative of local geographic position, date and a reference time of day;
   memory means storing information representing time differences between the reference time of day and local time for given geographic positions; and
   computing means receiving the information signals and being programmed to access the memory means to select therefrom information pertaining to any time difference between the reference time of day and local time, and to use such information to generate a signal representative of local time.

2. A receiver as set forth in claim 1 wherein the circuit means comprises signal processing circuitry for developing the signals representative of local geographic position, date, and a reference time of day from the satellite-transmitted signal.

3. A receiver as set forth in claim 1 wherein the memory means includes a time zone database containing information representing time offsets between a reference geographic position and each of a plurality of geographic time zones, and the computing means utilizes the geographic position information to extract, from the time zone database, a time offset associated with the local time zone, and the computing means combines the extracted time offset with the reference time of day to develop local standard time.

4. A receiver as set forth in claim 3 wherein the memory means includes a database containing daylight savings time rules, and the computing means accesses said rules to convert local standard time to local daylight savings time.

5. A receiver as set forth in claim 2 wherein the receiver is a GPS receiver, wherein the computing means uses said time difference to compute local standard time, and wherein the computing means and the memory means cooperate to develop local daylight savings time.

6. A receiver as set forth in claim 5 wherein the reference time of day is GMT and wherein the computing means is programmed to combine GMT with said time difference to compute local standard time.

# *FIG.1*

GPS SIGNAL PROCESSING 12

RF FRONT END (SELECTIVITY, AMPLIFICATION) → DOWN CONVERTER → A/D CONVERTER → DIGITAL SIGNAL PROCESSING/ POSITION, TIME, DATE COMPUTATION

REFERENCE FREQUENCY

TIME ZONE OFFSET PROGRAM 26

DAYLIGHT SAVINGS CORRECTION PROGRAM 28

COMPUTER 18 → DISPLAY 25

16 LATITUDE/ LONGITUDE DATE GMT

CORRECT LOCAL TIME

GEOGRAPHIC TIME ZONE DATABASE 22

DAYLIGHT SAVINGS RULES DATABASE 24

20

EP 0 498 199 A2

FIG.2